# EUROPEAN PATENT SPECIFICATION

(11) **EP 2 641 946 B1**
(45) Date of publication and mention of the grant of the patent: **26.11.2014**
(21) Application number: 13160409.2
(22) Date of filing: 21.03.2013
(51) Int. Cl.: C09D 183/04, H05B 3/40

(54) **Coating Composition, Heater of Washing Machine Having the Same, and Coating Method for the Heater**
Beschichtungszusammensetzung, damit beschichteter Heizstab für Waschmaschine und Beschichtungsverfahren für den Erhitzer
Composition de revêtement, dispositif de chauffage de machine à laver comportant celle-ci et procédé de revêtement pour le dispositif de chauffage

(30) Priority: 23.03.2012 KR 20120029920
(43) Date of publication of application: 25.09.2013
(73) Proprietor: Samsung Electronics Co., Ltd, Gyeonggi-do 443-742 (KR)
(72) Inventor: Lee, Hye Jeong, Gyeonggi-do (KR); Kim, Kyung Kook, Gyeonggi-do (KR); Kim, Kyong Il, Seoul (KR); Kim, Joo Ho, Gyeonggi-do (KR)
(74) Representative: Walaski, Jan Filip

(56) References cited:
- CN-U- 201 704 551
- US-A- 5 612 399
- US-A1- 2002 122 946

## Description

The present disclosure relates to a coating composition to prevent contamination of a heater caused by water or steam, a heater of a washing machine having the coating composition, and a method of coating the heater.

In electrical appliances, a heater is used to heat water in a state of being in contact with water or steam. Hereinafter, a washing machine will be described as an example thereof.

A washing machine is a machine that uses electric power to wash clothes. A washing machine includes a tub mounted in a housing to contain wash water, a drum rotatably mounted in the tub to be spaced apart from the tub by a predetermined distance, and a heater mounted at a lower portion of a space formed between the tub and the drum to heat wash water contained in the tub.

Although a heater improves washing performance of a washing machine by controlling temperature of wash water, minerals such as calcium carbonate (CaCO₃) and magnesium hydroxide (Mg(OH)₂) dissolved in the wash water are precipitated and accumulate on the surface of the heater after extended use. As scales accumulate on the surface of the heater, performance of the heater deteriorates. Accordingly, the power consumption of the washing machine for heating wash water is increased, thereby lengthening the washing time. In addition, excess accumulation of scales at a predetermined region may cause a short circuit in the heating wire disposed in the heater. Thus, the heater may cease to function properly, resulting in degradation in the performance of the washing machine.

In order to prevent this problem, a scale prevention device may be provided thereto, or the surface of the heater is treated with TEFLON or a ceramic composition.

However, when the scale prevention device is used, the scale prevention device is disposed between the tub and a drum. Thus, the size of the scale prevention device is limited, and disturbance generated in wash water by a small size scale prevention device is not sufficient to remove scales that have been formed on the heater.

In addition, TEFLON needs to be heat-treated at high temperature for a long period of time, and the ceramic compositions are degraded after extended use at high temperature.

Therefore, it is an aspect of the present disclosure to provide a coating composition capable of preventing scales from accumulating on the surface of a heater, and a heater of a washing machine having the coating composition.

Additional aspects will be set forth in part in the description which follows and, in part, will be obvious from the description, or may be learned by practice of the invention.

In accordance with one aspect, a heater of a washing machine contacting water or steam includes a heating wire, a magnesium oxide (MgO) layer disposed outside the heating wire to surround the heating wire to transmit heat from the heating wire to the outside, and a stainless alloy layer disposed outside the magnesium oxide layer to surround the magnesium oxide layer. The surface of the stainless alloy layer is coated with a coating composition including a silicon resin comprising organopolysiloxane and silicon including polysilsesquioxane.

The silicon including polysilsesquioxane may be composed of fine particles.

The organopolysiloxane may be represented by Formula 1 below:

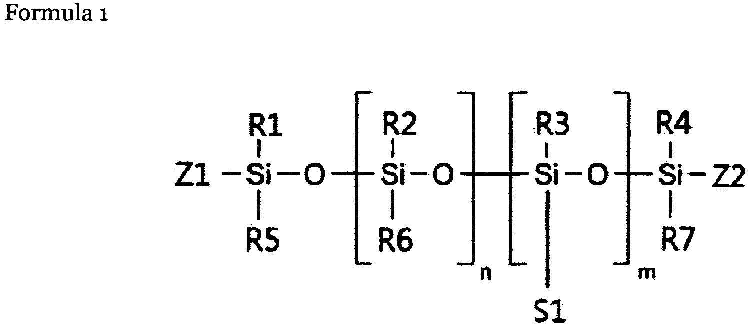

In Formula 1, R₁ to R₇ are selected from the group consisting of a linear chain alkyl group, a branched chain alkyl group, a cyclic alkyl group, an aryl group, and an alkoxy group, and S₁ may be represented by Formula 2 below:

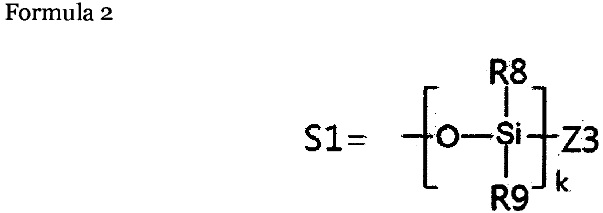

In Formula 2, R8 and R9 are selected from the group consisting of a linear chain alkyl group, a branched chain alkyl group, a cyclic alkyl group, an aryl group, and an alkoxy group or have a repeating unit of Formula 2. Furthermore, in Formula 1, Z1 to Z3 are selected from the group consisting of a hydroxyl group, a vinyl group, and an alkoxy group, n is an integer of 1 to 50,000, m is an integer of 1 to 10,000, and k is an integer of 0 to 10,000.

The polysilsesquioxane may be represented by Formula 3 below:

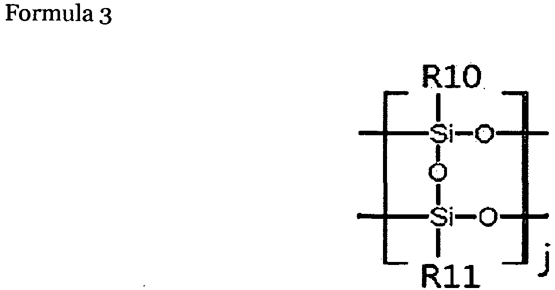

In Formula 3, R10 and R11 are selected from the group consisting of a hydrogen atom, a hydroxyl group, a vinyl group, an alkoxy group, an alkyl group unsubstituted or substituted with a reactive group, and an allyl group unsubstituted or substituted with a reactive group, and j is an integer of 1 to 100,000.

The content of the silicon including polysilsesquioxane may be in the range of 0.1 to 50% by weight.

A diameter of the fine particles may be about 10 microns or less.

The coating composition may further include a transition metal or an acidic catalyst to cure the silicon resin including organopolysiloxane and the silicon including polysilsesquioxane.

The stainless alloy layer may have protrusions and grooves on the surface thereof to improve adhesive force of a coating layer formed on the surface of the stainless alloy layer.

In accordance with another aspect, there is provided use of a composition comprising a silicon resin containing an organopolysiloxane and a polysilsesquioxane by forming a coating composition on the surface of a heater for contacting water or steam.

The organopolysiloxane may be represented by Formula 4 below:

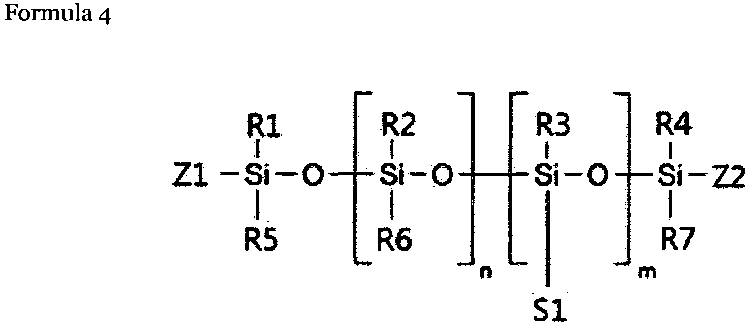

In Formula 4, R1 to R7 are selected from the group consisting of a linear chain alkyl group, a branched chain alkyl group, a cyclic alkyl group, and an alkoxy group, and S₁ is represented by Formula 5 below:

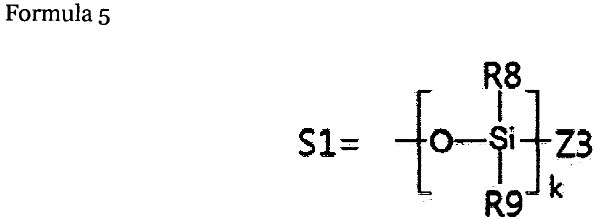

In Formula 5, R8 and R9 are selected from the group consisting of a linear chain alkyl group, a branched chain alkyl group, a cyclic alkyl group, and an alkoxy group or have a repeating unit of Formula 5. Furthermore, in Formula 4, Z1 to Z3 are selected from the group consisting of a hydroxyl group, a vinyl group, and an alkoxy group, n is an integer of 1 to 50,000, m is an integer of 1 to 10,000, and k is an integer of 0 to 10,000.

The polysilsesquioxane may be represented by Formula 6 below:

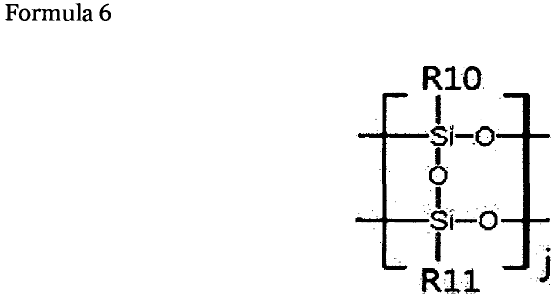

In Formula 6, R10 and R11 are selected from the group consisting of a hydrogen atom, a hydroxyl group, a vinyl group, an alkoxy group, an alkyl group unsubstituted or substituted with a reactive group, and an allyl group unsubstituted or substituted with a reactive group, and j is an integer of 1 to 100,000.

In accordance with one aspect, a method of coating a heater includes preparing a coating composition by mixing a silicon resin comprising organopolysiloxane and polysilsesquioxane, surface-treating the heater, forming a coating layer by coating the coating composition on the surface of the surface-treated heater, and curing the coating layer by heat-treating the coated heater.

The organopolysiloxane may be represented by Formula 7 below:

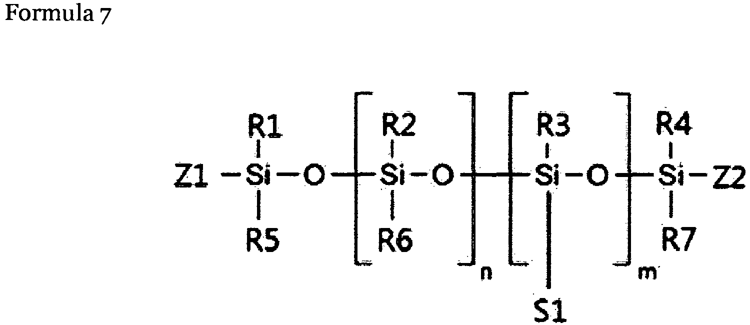

In Formula 7, R1 to R7 are selected from the group consisting of a linear chain alkyl group, a branched chain alkyl group, a cyclic alkyl group, and an alkoxy group, and S1 is represented by Formula 8 below:

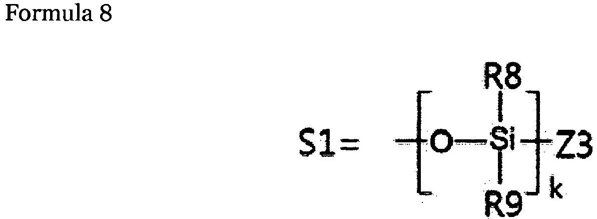

In Formula 8, R8 and R9 are selected from the group consisting of a linear chain alkyl group, a branched chain alkyl group, a cyclic alkyl group, and an alkoxy group or have a repeating unit of Formula 8. Furthermore, in Formula 7, Z1 to Z3 are selected from the group consisting of a hydroxyl group, a vinyl group, and an alkoxy group, n is an integer of 1 to 50,000, m is an integer of 1 to 10,000, and k is an integer of 0 to 10,000.

The surface-treating of the heater may include forming protrusions and grooves on the surface of the heater by sandblasting or chemical etching.

The forming of the coating layer by coating the coating composition on the surface of the heater may include spray coating, dip coating, spin coating, or flow coating.

These and/or other aspects will become apparent and more readily appreciated from the following description of the embodiments, taken in conjunction with the accompanying drawings of which:
FIG. 1 is perspective view illustrating a heater according to an embodiment;
FIG. 2 is a cross-sectional view of the heater of FIG. 1 taken along line AA';
FIG. 3 is a flowchart illustrating a method of manufacturing a heater according to an embodiment;
FIG. 4 is a cross-sectional view of a washing machine according to an embodiment;
FIG. 5 is a cross-sectional view of the heater of FIG. 1 taken along line AA' according to one embodiment;
FIG. 6 is a photograph illustrating the surface of a heater coated as in Comparative Example 2 in which scales are formed after a test according to Experimental Example 2; and
FIG. 7 is a photograph illustrating the surface of a heater coated as in Example 2 in which scales are not formed after a test according to Experimental Example 2.

Reference will now be made in detail to the embodiments, examples of which are illustrated in the accompanying drawings, wherein like reference numerals refer to like elements throughout. Hereinafter, a heater mounted in a washing machine will be described as an example. However, the heater is not limited thereto and may be any heater that heats water in a state of being in contact with water.

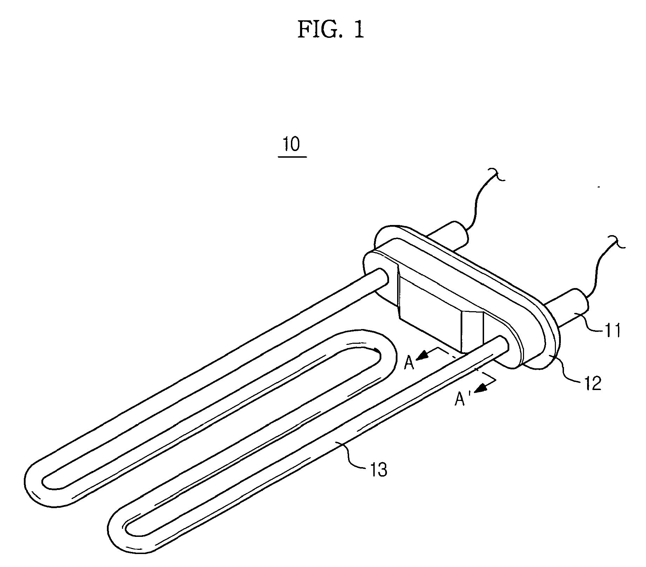

FIG. 1 is a perspective view illustrating a heater 10 according to an embodiment.

As illustrated in FIG. 1, the heater 10 is configured to have a predetermined diameter and length. The heater 10 may be configured in a zigzag shape. The heater 10 includes terminals 11 connected to cables in which current flows, a sealing member 12 disposed to be spaced apart from the terminals by a predetermined distance to prevent leakage of air, and a heating element 13 extending from the terminals 11. The heating element 13 having the predetermined diameter and length is bent a plurality of times.

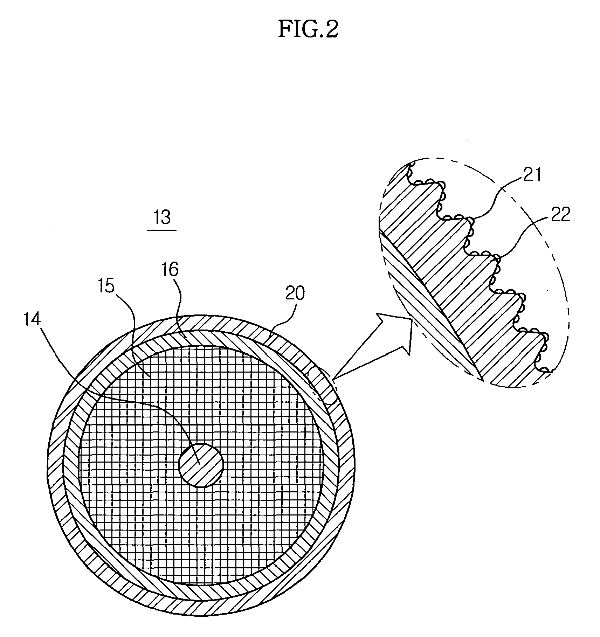

FIG. 2 is a cross-sectional view of the heater of FIG. 1 taken along line AA'.

As illustrated in FIG. 2, a heating wire 14 generating heat is disposed at the center of the heating element 13. A magnesium oxide (MgO) layer 15 and a stainless alloy layer 16 are sequentially disposed outside the heating wire 14. The stainless alloy layer 16 and the magnesium oxide layer 15 perform a function of transferring heat generated in the heating wire 14 to the outside. The surface of the heating element 13 contacts water or steam.

A coating layer 20 is disposed outside the stainless alloy layer 16. That is, the coating layer 20 is formed on the surface of the heating element 13. The coating layer 20 may be formed of a coating composition that includes a silicon resin including organopolysiloxane and silicon including polysilsesquioxane. The silicon including polysilsesquioxane may be in the form of fine particles of silicon. In this regard, the fine particles may have a diameter of 10 microns or less.

Organopolysiloxane contained in the coating composition according to an embodiment may have a structure represented by Formula 1 below.

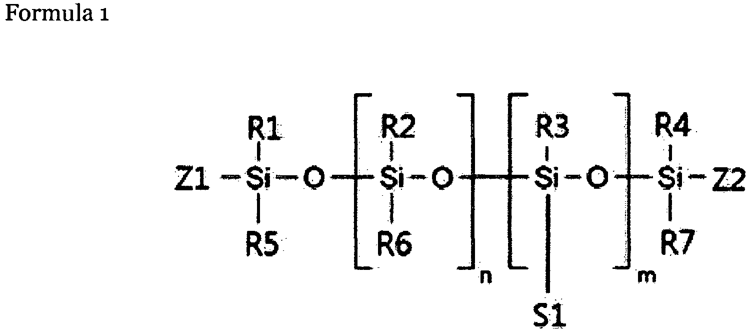

In Formula 1, R1 to R7 may be selected from the group consisting of a linear chain alkyl group, a branched chain alkyl group, a cyclic alkyl group, an aryl group, and an alkoxy group. Z1 and Z2 may be selected from the group consisting of a hydroxyl group, a vinyl group, and an alkoxy group. In Formula 1, n is an integer of 1 to 50,000, and m is an integer of 1 to 10,000. In addition, S1 of Formula 1 may have a structure represented by Formula 2 below.

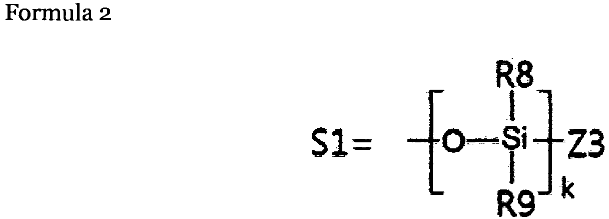

In Formula 2, R8 and R9 may be selected from the group consisting of a linear chain alkyl group, a branched chain alkyl group, a cyclic alkyl group, an aryl group, and an alkoxy group or may repeatedly have the structure of Formula 2. Z3 may be selected from the group consisting of a hydroxyl group, a vinyl group, and an alkoxy group, and k is an integer of 0 to 10,000.

In addition, polysilsesquioxane of the coating composition according to an embodiment may have a structure represented by Formula 3 below.

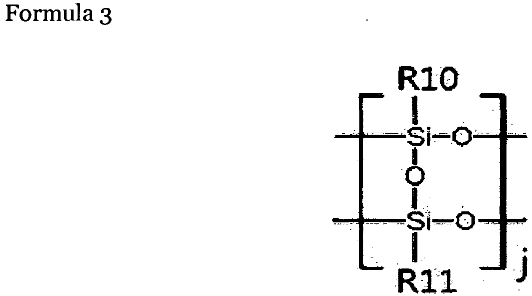

In Formula 3, R10 and R11 may be selected from the group consisting of a hydrogen atom, a hydroxyl group, a vinyl group, an alkoxy group, an alkyl group unsubstituted or substituted with a reactive group, and an allyl group unsubstituted or substituted with a reactive group. In addition, j is an integer of 1 to 100,000.

In Formulae 1 to 3, the alkyl group may be a linear chain alkyl group, a branched chain alkyl group, or a ring-shaped chain alkyl group. The number of carbon atoms of the alkyl group is not limited, but may be 1 to 30. Particularly, examples of the alkyl group may include a methyl group, an ethyl group, an n-propyl group, an iso-propyl group, an n-butyl group, a sec-butyl group, a t-butyl group, an n-pentyl group, an iso-pentyl group, a neo-pentyl group, an n-hexyl group, a cyclopropyl group, a cyclobutyl group, a cyclopentyl group, and a cyclohexyl group, but are not limited thereto.

In Formulae 1 to 3, the alkoxy group may be a linear chain alkoxy group, a branched chain alkoxy group, or a ring-shaped chain alkoxy group. The number of carbon atoms of the alkoxy group is not limited, but may be 1 to 30. Particularly, examples of the alkoxy group may include a methoxy group, an ethoxy group, an n-propyloxy group, an iso-propyloxy group, an n-butyloxy group, and a cyclopentyloxy group, without being limited thereto.

In Formulae 1 and 2, the aryl group may be a single-ring-shaped aryl group or a multi-ring-shaped aryl group. The number of carbon atoms of the aryl group is not limited, but may be 6 to 60. Particularly, examples of the single-ring-shaped aryl group may include a phenyl group, a biphenyl group, a terphenyl group, and a stylbenyl group, but are not limited thereto. Examples of the multi-ring-shaped aryl group may include a naphthyl group, an anthryl group, a phenanthryl group, a pyrenyl group, a perylenyl group, a chrycenyl group, and a fluorenyl group, but are not limited thereto.

In Formula 3, the expression "a group unsubstituted or substituted with a reactive group" refers to a group substituted with at least one reactive group selected from the group consisting of a hydroxyl group, a carboxyl group, an isocyanate group, an amine group, an amide group, a carbamate group, a urea group, an urethane group, a vinyl group, and an unsaturated ester group or a group not having any reactive group.

The coating composition may further include a solvent to facilitate processing. Examples of the solvent may include hydrocarbons, halogenated hydrocarbons, ethers, ketones, and alcohols. Particularly, 2-propaneol and toluene may be used, but the solvent is not limited thereto.

The coating composition may further include a curing catalyst for curing the coating layer. The curing catalyst may be a transition metal or an acidic material. Particularly, examples of the transition metal may include zinc, tin, nickel, and chromium, and examples of the acidic catalyst may include hydrochloric acid, nitric acid, phosphoric acid, acetic acid, potassium hydroxide, amines, hydrogen fluoride (HF), and fluorinated potassium (KF), without being limited thereto.

In order to improve adhesive force of the coating composition to the surface of the heater, an adhesion enhancer may be further added to the coating composition. The adhesion enhancer may include a silane compound having an amino group. In particular, N(beta-aminoethyl)-gamma-aminopropyl trimethoxysilane (NH₂-(CH₂)₂-NH-(CH₂)₃-Si-(OCH₃)₃) may be used.

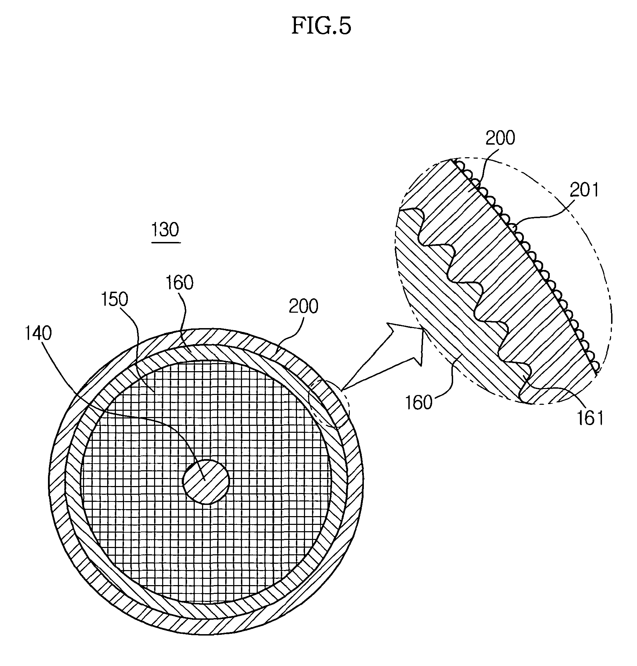

Meanwhile, the surface of the heater may be processed to have a double protrusion-groove structure as illustrated by FIG. 2. For example, the coating layer 20 that constitutes the surface of the heater may be surface-treated to form protrusions and grooves. For example, surface protrusions and grooves 22 may be formed by sandblasting the surface of the heater. In addition, fine protrusions and grooves 21 are formed on the surface of the surface protrusions and grooves 22 by fine particles of polysilsesquioxane. As a result, a double protrusion-groove structure 21 and 22 is formed. The double protrusion-groove structure 21 and 22 improves water repellency and facilitates bubble formation on the surface of the heater when heated by the heater, so that scales may be efficiently detached. The stainless alloy layer 16 may comprise a protrusion and groove structure, as illustrated by FIG. 5, to improve the adhesion of the coating layer 20 to the stainless layer 16 as describe below. The heater may comprise a protrusion and groove structure on both the coating layer 20 and the stainless alloy layer 16.

The coating composition may further include a silicone oil to improve non-stick ability for prevention of scales from sticking to the coating layer. The silicone oil may include reactive silicone oil and/or non-reactive silicone oil. Particularly, examples of the non-reactive silicone oil may include dimethyl silicone oil, phenyl modified silicone oil, and alkyl modified silicone oil, without being limited thereto. Examples of the reactive silicone oil may include amino modified silicone oil, hydroxyl silicone oil, vinyl modified silicone oil, and methyl hydrogen silicone oil, without being limited thereto.

The coating composition may include 0.1 to 50% by weight of silicon including polysilsesquioxane. When the content of the silicon including polysilsesquioxane is less than 0.1% by weight, scale inhibition efficiency of the composition may be reduced. On the other hand, when the content of the silicon including polysilsesquioxane is greater than 50% by weight, scale inhibition efficiency of the composition may be reduced in comparison with the amount of the added silicon including polysilsesquioxane, thereby reducing processing efficiency. The weight ratio of the coating composition is applied to both cases with or without a solvent in addition to the silicon resin including organopolysiloxane and silicon including polysilsesquioxane.

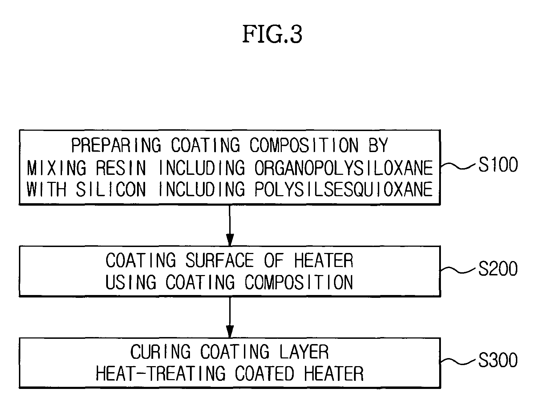

FIG. 3 is a flowchart illustrating a method of manufacturing a heater according to an embodiment.

The method of manufacturing a heater includes preparing a coating composition (S100), forming a coating layer by coating the coating composition on the surface of the heater (S200), and curing the coating layer by heat-treating the coated heater (S300).

The method may also include additional operations that will be apparent to those of ordinary skill in the art.

The preparation of the coating composition (S100) may include mixing a resin including organopolysiloxane and silicon including polysilsesquioxane. An additive may be added to the coating composition in order to improve functionality of the coating layer. Examples of the additive may include an adhesion enhancer, a curing catalyst, and/or silicone oil, as described above.

The adhesion enhancer may prevent the coating layer from being delaminated from the surface of the heater by improving adhesive force of the coating layer to the surface of the heater. As the adhesion enhancer, a silane compound to which an amino group is bonded may be used. The curing catalyst may be a transition metal or an acidic material and may be used to cure the coating layer. In addition, silicone oil may be used in order to improve non-stick ability of the coating composition.

In addition, in order to improve processibility of a coating composition in the preparation of the coating composition (S100), a solvent for mixing the resin including organopolysiloxane and the silicon including polysilsesquioxane may be used. Examples of the solvent may include hydrocarbons, halogenated hydrocarbons, ethers, ketones, and alcohols.

In the forming of the coating layer by coating the coating composition on the surface of the heater (S₂₀₀), the coating method is not particularly limited and any coating method may be used in accordance with a surface pattern and size of the heater. Particularly, the coating layer may be formed on the surface of the heater by spray coating, dip coating, spin coating, flow coating, and the like.

Spray coating refers to a method of coating the surface of an object by spraying a low viscosity coating solution through a spray nozzle. A coating layer may be uniformly formed even on a non-uniform surface or on the surface having protrusions and grooves. Generally, spray coating is applied to one surface of the object, and thus a small amount of the coating solution is used, and energy for evaporation is reduced. According to an embodiment of the present invention, when the surface of the heater is treated to form protrusions and grooves, spray coating may be used by adjusting viscosity of the coating composition.

Dip coating refers to a method of coating an object by dipping the object in a coating solution for a predetermined period of time and evaporating a solvent component. Dip coating is generally used for coating of an object with a non-uniform surface. Thus, the dip coating may be applied to the heater in accordance with the surface of the heater to which the coating composition according to the present embodiment is applied.

Spin coating is generally used to form a thin coating layer since the coating solution is sprayed onto a rotating object, dried and heat-treated. According to the spin coating, the coating solution applied to the object rotated by a spin-coater is spread by centrifugal force. In this regard, the coating composition may be in a solution state or in a liquid state by use of a solvent. Particularly, if the coating composition is in a liquid state by use of a solvent, a film may be formed on the surface of the object by spin coating.

Flow coating is a coating method performed by pouring a paint onto an object and may be efficiently used only when a small amount of the object is coated.

The curing of the coating layer by heat-treatment of the heater on which the coating layer is formed (S₃₀₀) may include drying the coating layer. The drying may be performed at a temperature of 25 to 60 for 1 min to 1 hr. The heat-treatment may be performed at a temperature of 80 to 200 for 10 min to 24 hr. As the heat-treatment time decreases, the curing of the coating layer may not be completely performed. On the other hand, as the heat-treatment time increases, mass productivity may be reduced. Thus, the heat-treatment may be performed with the range as described above.

Meanwhile, the method may further include processing the surface of the heater to improve adhesive force of the coating layer formed on the surface of the heater before forming the coating layer by coating the coating composition on the surface of the heater (S₂₀₀). For example, the surface of the heater may have protrusions and grooves by surface treatment. For example, the surface of the heater may be modified by sandblasting. Beads used in the sandblasting may include grid glass beads, ceramic beads, and metal beads with a small diameter. The size of the beads may vary, and beads having different sizes and types may be used in combination. In addition, chemical etching may also be used to form protrusions and grooves on the surface of the heater in addition to the sandblasting.

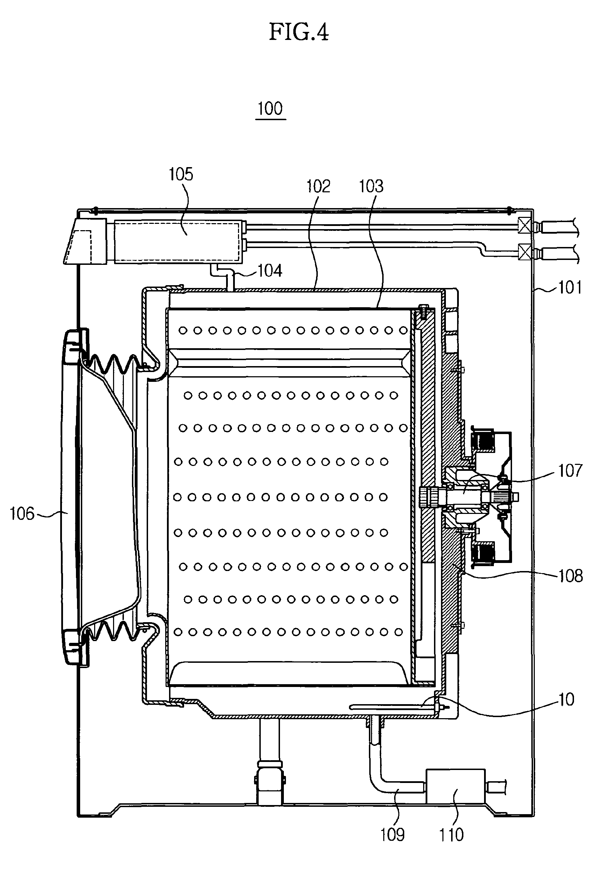

FIG. 4 is a cross-sectional view of a washing machine 100 according to an embodiment.

As illustrated in FIG. 4, the washing machine 100 includes a body 101 defining the external appearance of the washing machine 100, a tub 102 mounted in the body 101 to contain wash water when performing washing, a drum 103 rotatably mounted in the tub 102 to wash laundry when performing washing. Here, a door 106 is mounted at the front of the body 101 to open and close an opening through which laundry is put into the drum 103.

A water supply pipe 104 and a detergent supply unit 105 to supply wash water and detergent into the tub 102 are mounted in the body 101. The detergent supply unit 105 has a chamber to contain detergent. In order to allow the user to easily put detergent into the chamber, the detergent supply unit 105 is arranged at the front of the body 101. In addition, a drainage pump 110 and a drainage pipe 109 are mounted at a lower portion of the body 101 in order to drain wash water from the drum 103.

A motor to rotate the drum 103 in alternating directions is mounted outside of the tub 102. A flange shaft 108 and a rotary shaft 107 are mounted at the rear of the drum 103 to transmit the rotating force of the motor to the drum 103.

The rotary shaft 107 is coupled to the center of the flange shaft 108 and extends to the outside of the tub 102 to be connected to the motor. The flange shaft 108 has a plurality of blades extending from the center thereof, to which the rotary shaft 107 is coupled, in the radial direction. Ends of the blades are fixed to the drum 103 by fixing members such as bolts.

Consequently, when the rotary shaft 107 is rotated by the motor, the flange shaft 108 coupled with the rotary shaft 107 is rotated. Accordingly, as the drum 103 connected to the flange shaft 108 is rotated, laundry in the drum 103 is washed or spin-dried.

The washing machine 100 according to the present embodiment further includes a heater 10 to heat wash water supplied into the tub 102, thereby improving washing efficiency, and to perform an antibacterial function through boiling washing.

FIG. 5 is a cross-sectional view of the heater of FIG. 1 taken along line AA' according to an embodiment.

The heater according to the embodiment illustrated in FIG. 5 has the same structure including a heating wire 140, a magnesium oxide layer 150, a stainless alloy layer 160, and a coating layer 200 as the heater according to the embodiment illustrated in FIG. 2. However, protrusions and grooves 161 are formed on the surface of the stainless alloy layer 160 in the heater illustrated in FIG. 5.

The protrusions and grooves 161 may be formed on the surface of the stainless alloy layer 160 by sandblasting. Fine protrusions and grooves 201 may be formed on the surface of the coating layer 200 by fine particles of polysilsesquioxane.

The protrusions and grooves 161 formed on the surface of the stainless alloy layer 160 may improve adhesive force of the coating layer 200. In addition, the fine protrusions and grooves 201 formed on the surface of the coating layer 200 may improve water repellency and facilitate bubble formation on the surface of the heater when heated by the heater, so that scales may be efficiently detached.

Now, the embodiments will be described in more detail with reference to the following examples. These examples are only provided to illustrate the present invention and should not be construed as limiting the scope of the present invention as defined in the claims.

### Example 1

A water repellent fine powder was added to a coating composition including 20 g of a polysiloxane resin, 1 g of polysilsesquioxane silicon fine particles, 21 g of toluene, 16.7 g of 2-propaneol, and 0.24 g of a curing catalyst. The coating composition was stirred at room temperature for 30 min for uniform mixing to prepare a coating solution. The prepared coating solution was coated on the surface of a heating element of a heater by dip coating and cured at 110º for 30 min.

### Example 2

A coating was performed in the same manner as in Example 1, except that the heater was surface-treated by use of glass beads #80, and then the coating solution was applied thereto.

### Example 3

A coating was performed in the same manner as in Example 2, except that 0.2 g of the polysilsesquioxane silicon fine particles were used.

### Example 4

Coating was performed in the same manner as in Example 2, except that 4 g of the polysilsesquioxane silicon fine particles were used.

### Example 5

Coating was performed in the same manner as in Example 2, except that a coating solution including 20 g of the polysiloxane resin, 0.1 g of the polysilsesquioxane silicon fine particles, 62.5 g of toluene, 16.7 g of 2-propaneol, and 0.24 g of the curing catalyst was used.

### Example 6

Coating was performed in the same manner as in Example 2, except that a coating solution including 20 g of the polysiloxane resin, 20 g of the polysilsesquioxane silicon fine particles, and 0.24 g of the curing catalyst was used.

### Comparative Example 1

A general heater that is not coated was used in Comparative Example 1. The surface of a heating element was formed of a rust-resistant iron plate.

### Comparative Example 2

A coating was performed in the same manner as in Example 1, except that the polysilsesquioxane silicon fine particles were not used.

### Experimental Example 1

The amounts of scales accumulating on the surface of the heater of Examples 1 and 2 and Comparative Examples 1 and 2 were evaluated. Hard water having a concentration of 1000 ppm was used and prepared in accordance with IEC 60734, 3rd edition. An accelerated life test was performed 20 times by conducting an operation in hard water for 10 min and stopping the operation for 10 min. The results are shown in Table 1 below. Here, '○' indicates that scales formed on the surface of the heater are easily removed by weak water flow, 'Δ' indicates that scales are partially removed by strong water flow, and '×' indicates that scales are not removed.

**Table 1**

| Item | Example 1 | Example 2 | Example 3 | Example 4 | Example 5 | Example 6 | Comparative Example 1 | Comparative Example 2 |
|---|---|---|---|---|---|---|---|---|
| Amount of scale accumulation (g) | 0.223 | 0.13 | 0.345 | 0.34 | 0.36 | 0.41 | 1.1 | 0.86 |
| Scale removal efficiency | ○ | ○ | ○ | ○ | ○ | ○ | Δ | × |

As shown in Table 1, it was confirmed that the amount of scales formed on the heater coated with the coating composition including the polysiloxane resin according to Examples 1, 2, 3, 4, 5, and 6 was relatively low. In addition, when the polysilsesquioxane silicon fine particles were mixed with the polysiloxane resin, the amount of scales was further reduced. In addition, when the surface of the heater had protrusions and grooves formed by treatment with beads, the amount of scales was further reduced. In addition, it was confirmed that, under the same conditions, scale reduction efficiency using the polysilsesquioxane silicon fine particles in an amount less than 1 g (Example 3) or in an amount greater than 1 g (Example 4) was lower than scale reduction efficiency using 1 g of the polysilsesquioxane silicon fine particles (Example 2). In addition, it was confirmed that the formation of scales was reduced by adjusting the amounts of the solvent and the polysilsesquioxane silicon fine particles in the coating solution in terms of the weight% of the polysilsesquioxane silicon fine particles. Scale reduction efficiency using the polysilsesquioxane silicon fine particles in an amount less than 1.7% by weight (Example 5) or greater than 1.7% by weight (Example 6) was lower than scale reduction efficiency using 1.7% by weight of the polysilsesquioxane silicon fine particles (Example 2).

When the polysiloxane resin was mixed with the polysilsesquioxane silicon fine particles, the amount of scales was reduced by about 80% in comparison with the heater that is not coated. When the protrusions and grooves were formed on the surface of the heater, the amount of scales was reduced by about 89% in comparison with conventional heaters.

In addition, it was confirmed that scales that had already been formed were easily removed by weak water flow when the polysiloxane resin was mixed with the polysilsesquioxane silicon fine particles.

As described above, when the polysiloxane resin is mixed with the polysilsesquioxane silicon fine particles, the amount of scales may be reduced and adhesive force of scales may be reduced.

### Experimental Example 2

The amounts of scales formed on the heater according to Example 2 and Comparative Example 2 were evaluated. In particular, in order to identify problems occurring after long-term use, long-term accelerated life tests were performed. Hard water having a concentration of 1000 ppm was used and prepared in accordance with IEC 60734, 3rd edition. The accelerated life test was performed 240 times by conducting an operation in hard water for 10 min and stopping the operation for 10 min. These conditions for the accelerated life test correspond to those after 4-year use based on a calculation method. The results are shown in Table 2 below. Here, '○' indicates that scales formed on the surface of the heater are easily removed by weak water flow, ' ' indicates that scales are partially removed by strong water flow, and '×' indicates that scales are not removed.

**Table 2**

| Item | Example 2 | Comparative Example 2 |
|---|---|---|
| Amount of scale accumulation (g) | 1.6 | 7.9 |
| Scale removal efficiency | ○ | × |

As shown in Table 2, it was confirmed that the amount of scales was reduced when the polysiloxane resin was mixed with the polysilsesquioxane silicon fine particles. When the polysilsesquioxane silicon fine particles were added, the amount of scales was reduced by about 80% compared with the case in which the polysilsesquioxane silicon fine particles were not used. In addition, scales that had already been formed were easily removed by weak water flow.

### Experimental Example 3

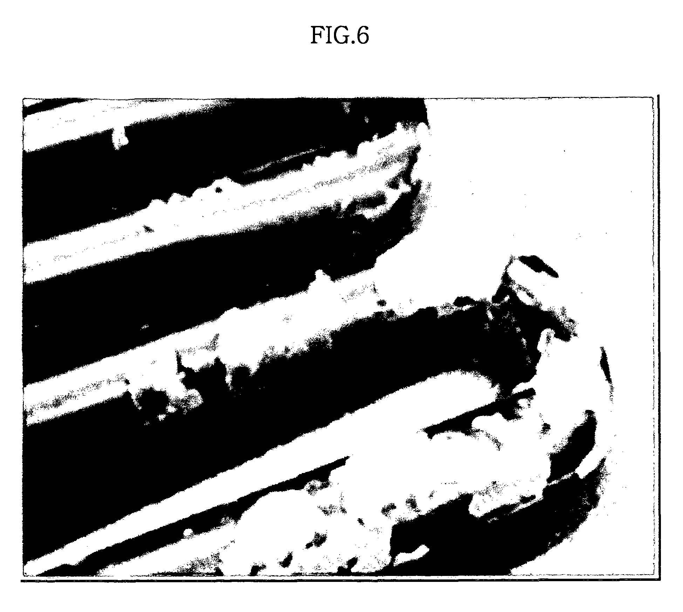

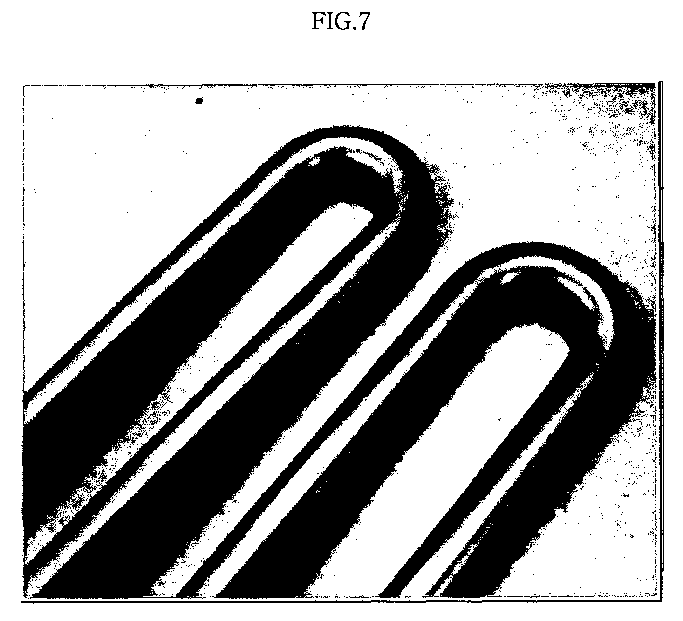

Adhesive force of the coating compositions according to Examples 1 and 2 to the surface of the heater was evaluated. Hard water having a concentration of 1000 ppm was used and prepared in accordance with IEC 60734 3rd edition. An accelerated life test was performed 20 times by conducting an operation in hard water for 10 min and stopping the operation for 10 min. The results are shown in FIGS. 6 and 7. FIG. 6 is a photograph showing the test result of Comparative Example 2, and FIG. 7 is a photograph showing the test result of Example 2.

As illustrated in FIGS. 6 and 7, when the surface of the heater was not treated, the coating was delaminated. When the surface of the heater was treated to form protrusions and grooves, and then coated with the coating composition, the coating was not delaminated. As described above, when the surface of the heater was treated, the coating layer was stably adhered to the surface of the heater.

As described above, the amount of scales may be reduced, and the scales may be efficiently removed. In addition, when the surface of the heater is processed to form protrusions and grooves, delamination of the coating may be prevented.

Furthermore, cracks may occur on the surface of conventional heaters. Cracks accelerate the formation of scales and increase physical adhesive force of the scales. When additional heat treatment is performed to prevent cracks, non-stick ability may be deteriorated, so that the amount of scales decreases, and adhesive force of the scales increases. Since the coating composition according to an embodiment of the present invention includes polysilsesquioxane silicon mixed with the polysiloxane resin, fine protrusions and grooves are formed by the polysilsesquioxane silicon. In addition, by surface treatment of the heater, additional protrusions and grooves are formed on the surface, thereby reducing the formation of scales.

Conventionally, the surface of the heater is degraded after extended use. Although a conventional coating material needs to be cured at a temperature of 200 or higher, the heater cannot be heat-treated at a high temperature of 200 due to the structure thereof. Thus, interaction between the coating material and the heater is not completely performed. Accordingly, degradation of the surface of the heater causes incomplete electron coupling, thereby increasing accumulation of scales. Since the coating composition according to embodiments of the present invention is curable at a low temperature, the surface of the heater is not degraded after extended use. As a result, formation of scales may be prevented.

As is apparent from the above description, a coating composition according to the disclosed embodiments may prevent the formation and adhesion of scales on the surface of the heater, and thus defects may be reduced in electrical and electronic appliances.

Furthermore, the coating composition according to the disclosed embodiments may be cured at a low temperature and degradation does not occur on the surface of the heater after extended use thereof. As a result, formation of scales may be prevented.

Although a few embodiments have been shown and described, it would be appreciated by those skilled in the art that changes may be made in these embodiments without departing from the principles of the invention, the scope of which is defined in the claims.

## Claims

1. A heater of a washing machine for contacting water or steam, the heater comprising:
a heating wire;
a magnesium oxide (MgO) layer disposed outside the heating wire to surround the heating wire to transmit heat from the heating wire to the outside; and
a stainless alloy layer disposed outside the magnesium oxide layer to surround the magnesium oxide layer,
the surface of the stainless alloy layer being coated with a coating composition comprising a silicon resin comprising organopolysiloxane and silicon comprising polysilsesquioxane.

2. The heater according to claim 1, wherein the silicon comprising polysilsesquioxane is composed of fine particles.

3. The heater according to claim 1 or 2, wherein the organopolysiloxane is represented by Formula 1 below: 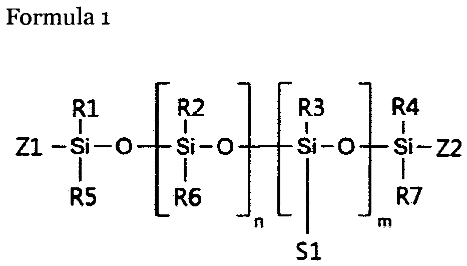 where R1 to R7 are selected from the group consisting of a linear chain alkyl group, a branched chain alkyl group, a cyclic alkyl group, an aryl group, and an alkoxy group, and
S1 is represented by Formula 2 below: 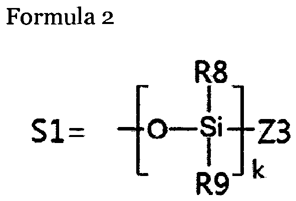 where R8 and R9 are selected from the group consisting of a linear chain alkyl group, a branched chain alkyl group, a cyclic alkyl group, an aryl group, and an alkoxy group or have a repeating unit of Formula 2,
Z1 to Z3 are selected from the group consisting of a hydroxyl group, a vinyl group, and an alkoxy group,
n is an integer of 1 to 50,000, m is an integer of 1 to 10,000, and k is an integer of 0 to 10,000.

4. The heater according to claim 1 or 2, wherein the silicon including polysilsesquioxane is represented by Formula 3 below: 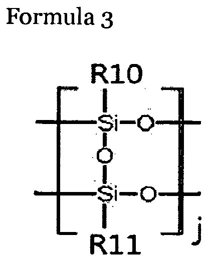 where R10 and R11 are selected from the group consisting of a hydrogen atom, a hydroxyl group, a vinyl group, an alkoxy group, an alkyl group unsubstituted or substituted with a reactive group, and an allyl group unsubstituted or substituted with a reactive group, and
j is an integer of 1 to 100,000.

5. The heater according to any one of the preceding claims, wherein the content of the silicon comprising polysilsesquioxane is in the range of 0.1 to 50% by weight.

6. The heater according to claim 2, wherein a diameter of the fine particles is about 10 microns or less.

7. The heater according to any one of the preceding claims, wherein the coating composition further comprises a transition metal or an acidic catalyst to cure the silicon resin comprising organopolysiloxane and the silicon comprising polysilsesquioxane.

8. The heater according to any one of the preceding claims, wherein the stainless alloy layer has protrusions and grooves on the surface thereof to improve adhesive force of a coating layer formed on the surface of the stainless alloy layer.

9. Use of a composition comprising a silicon resin containing an organopolysiloxane and a polysilsesquioxane by forming a coating composition on the surface of a heater for contacting water or steam.

10. The use according to claim 9, wherein the organopolysiloxane is represented by Formula 4 below: 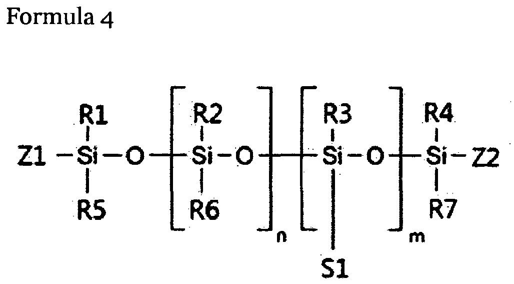 where R1 to R7 are selected from the group consisting of a linear chain alky group, a branched chain alkyl group, a cyclic alkyl group, and an alkoxy group, and
S1 is represented by Formula 5 below: 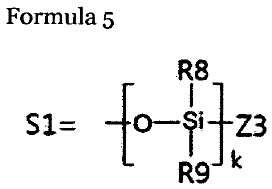 where R8 and R9 are selected from the group consisting of a linear chain alkyl group, a branched chain alkyl group, a cyclic alkyl group, and an alkoxy group or have a repeating unit of Formula 5,
Z1 to Z3 are selected from the group consisting of a hydroxyl group, a vinyl group, and an alkoxy group,
n is an integer of 1 to 50,000, m is an integer of 1 to 10,000, and k is an integer of 0 to 10,000.

11. The use according to claim 10, wherein the polysilsesquioxane is represented by Formula 6 below: 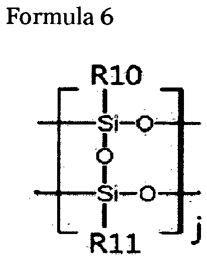 where R10 and R11 are selected from the group consisting of a hydrogen atom, a hydroxyl group, a vinyl group, an alkoxy group, an alkyl group unsubstituted or substituted with a reactive group, and an allyl group unsubstituted or substituted with a reactive group, and
j is an integer of 1 to 100,000.

12. A method of coating a heater, the method comprising:
preparing a coating composition by mixing a silicon resin comprising organopolysiloxane and polysilsesquioxane;
surface-treating the heater;
forming a coating layer by coating the coating composition on the surface of the surface-treated heater; and
curing the coating layer by heat-treating the coated heater.

13. The method according to claim 12, wherein the organopolysiloxane is represented by Formula 7 below: 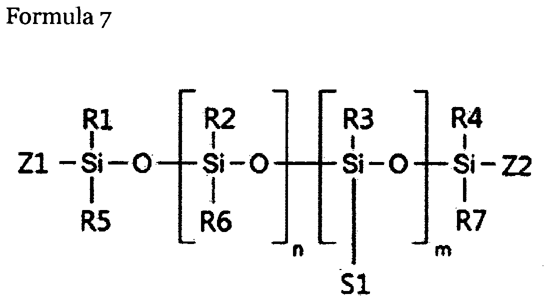 where R1 to R7 are selected from the group consisting of a linear chain alkyl group, a branched chain alkyl group, a cyclic alkyl group, and an alkoxy group, and
S1 is represented by Formula 8 below: 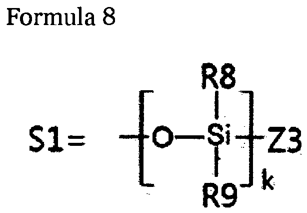 where R8 and R9 are selected from the group consisting of a linear chain alkyl group, a branched chain alkyl group, a cyclic alkyl group, and an alkoxy group or have a repeating unit of Formula 8,
Z1 to Z3 are selected from the group consisting of a hydroxyl group, a vinyl group, and an alkoxy group,
n is an integer of 1 to 50,000, m is an integer of 1 to 10,000, and k is an integer of 0 to 10,000.

14. The method according to claim 12 or 13, wherein the surface-treating of the heater comprises forming protrusions and grooves on the surface of the heater by sandblasting or chemical etching.

15. The method according to claim 12, 13 or 14, wherein the forming of the coating layer by coating the coating composition on the surface of the heater comprises spray coating, dip coating, spin coating, or flow coating.

## Patentansprüche

1. Heizelement einer Waschmaschine zum Kontaktieren von Wasser oder Dampf, wobei das Heizelement Folgendes umfasst:
einen Heizdraht;
eine Magnesiumoxidschicht (MgO-Schicht), die außerhalb des Heizdrahts angeordnet ist, um den Heizdraht zu umschließen, um Wärme von dem Heizdraht an die Außenseite zu übertragen; und
eine rostfreie Legierungsschicht, die außerhalb der Magnesiumoxidschicht angeordnet ist, um die Magnesiumoxidschicht zu umschließen,
wobei die Oberfläche der rostfreien Legierungsschicht mit einer Beschichtungszusammensetzung beschichtet ist, die ein Silikonharz, das Organopolysiloxan umfasst, und Silikon, das Polysilsesquioxan umfasst, umfasst.

2. Heizelement nach Anspruch 1, wobei das Silikon, das Polysilsesquioxan umfasst, sich aus feinen Partikeln zusammensetzt.

3. Heizelement nach Anspruch 1 oder 2, wobei das Organopolysiloxan durch die folgende Formel 1 dargestellt wird: 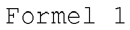 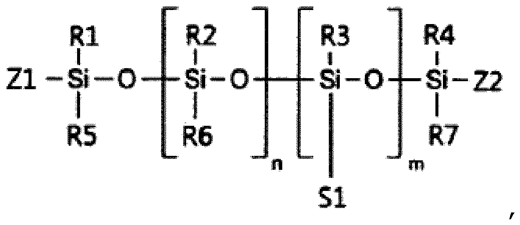 wobei R1 bis R7 aus der Gruppe bestehend aus einer Alkylgruppe mit linearer Kette, einer Alkylgruppe mit verzweigter Kette, einer cyclischen Alkylgruppe, einer Arylgruppe und einer Alkoxygruppe ausgewählt sind und
S1 durch die folgende Formel 2 dargestellt wird: 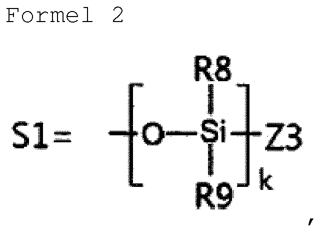 wobei R8 und R9 aus der Gruppe bestehend aus einer Alkylgruppe mit linearer Kette, einer Alkylgruppe mit verzweigter Kette, einer cyclischen Alkylgruppe, einer Arylgruppe und einer Alkoxygruppe ausgewählt sind oder eine Struktureinheit von Formel 2 aufweisen,
Z1 bis Z3 aus der Gruppe bestehend aus einer Hydroxylgruppe, einer Vinylgruppe und einer Alkoxygruppe ausgewählt sind,
n eine ganze Zahl von 1 bis 50.000 ist, m eine ganze Zahl von 1 bis 10.000 ist und k eine ganze Zahl von 0 bis 10.000 ist.

4. Heizelement nach Anspruch 1 oder 2, wobei das Silikon, das Polysilsesquioxan enthält, durch die folgende Formel 3 dargestellt wird: 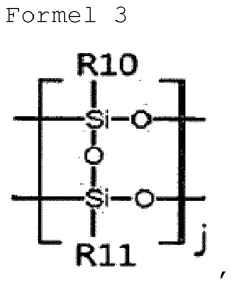 wobei R10 und R11 aus der Gruppe bestehend aus einem Wasserstoffatom, einer Hydroxylgruppe, einer Vinylgruppe, einer Alkoxygruppe, einer Alkylgruppe, die unsubstituiert oder mit einer reaktiven Gruppe substituiert ist, und einer Allylgruppe, die unsubstituiert oder mit einer reaktiven Gruppe substituiert ist, ausgewählt sind und
j eine ganze Zahl von 1 bis 100.000 ist.

5. Heizelement nach einem der vorhergehenden Ansprüche, wobei der Gehalt des Silikons, das Polysilsesquioxan umfasst, im Bereich von 0,1 bis 50 Gew.-% liegt.

6. Heizelement nach Anspruch 2, wobei ein Durchmesser der feinen Partikel etwa 10 Mikron oder weniger beträgt.

7. Heizelement nach einem der vorhergehenden Ansprüche, wobei die Beschichtungszusammensetzung weiterhin ein Übergangsmetall oder einen sauren Katalysator umfasst, um das Silikonharz, das Organopolysiloxan umfasst, und das Silikon, das Polysilsesquioxan umfasst, zu härten.

8. Heizelement nach einem der vorhergehenden Ansprüche, wobei die rostfreie Legierungsschicht auf ihrer Oberfläche Überstände und Rillen aufweist, um die Haftfestigkeit einer Beschichtungsschicht zu verbessern, die auf der Oberfläche der rostfreien Legierungsschicht gebildet wird.

9. Verwendung einer Zusammensetzung, die ein Silikonharz, das ein Organopolysiloxan und ein Polysilsesquioxan enthält, umfasst, zum Bilden einer Beschichtungszusammensetzung auf der Oberfläche eines Heizelements zum Kontaktieren von Wasser oder Dampf.

10. Verwendung nach Anspruch 9, wobei das Organopolysiloxan durch die folgende Formel 4 dargestellt wird: 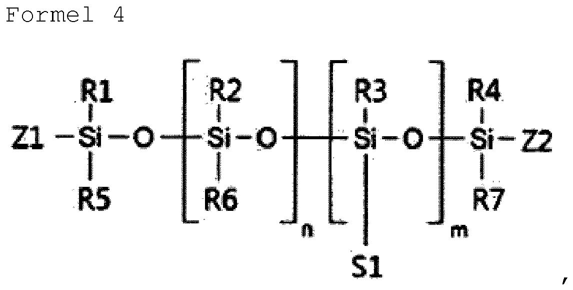 wobei R1 bis R7 aus der Gruppe bestehend aus einer Alkylgruppe mit linearer Kette, einer Alkylgruppe mit verzweigter Kette, einer cyclischen Alkylgruppe und einer Alkoxygruppe ausgewählt sind und
S1 durch die folgende Formel 5 dargestellt wird: 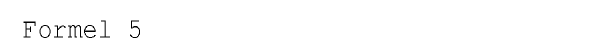 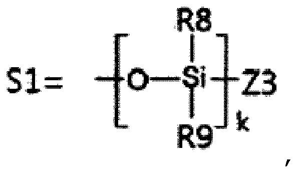 wobei R8 und R9 aus der Gruppe bestehend aus einer Alkylgruppe mit linearer Kette, einer Alkylgruppe mit verzweigter Kette, einer cyclischen Alkylgruppe und einer Alkoxygruppe ausgewählt sind oder eine Struktureinheit von Formel 5 aufweisen,
Z1 bis Z3 aus der Gruppe bestehend aus einer Hydroxylgruppe, einer Vinylgruppe und einer Alkoxygruppe ausgewählt sind,
n eine ganze Zahl von 1 bis 50.000 ist, m eine ganze Zahl von 1 bis 10.000 ist und k eine ganze Zahl von 0 bis 10.000 ist.

11. Verwendung nach Anspruch 10, wobei das Polysilsesquioxan durch die folgende Formel 6 dargestellt wird: 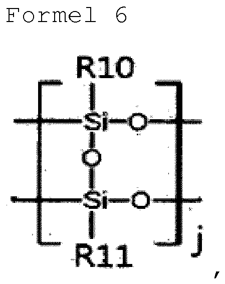 wobei R10 und R11 aus der Gruppe bestehend aus einem Wasserstoffatom, einer Hydroxylgruppe, einer Vinylgruppe, einer Alkoxygruppe, einer Alkylgruppe, die unsubstituiert oder mit einer reaktiven Gruppe substituiert ist, und einer Allylgruppe, die unsubstituiert oder mit einer reaktiven Gruppe substituiert ist, ausgewählt sind und
j eine ganze Zahl von 1 bis 100.000 ist.

12. Verfahren zum Beschichten eines Heizelements, wobei das Verfahren Folgendes umfasst:
Herstellen einer Beschichtungszusammensetzung durch Mischen eines Silikonharzes, das Organopolysiloxan und Polysilsesquioxan umfasst;
Oberflächenbehandeln des Heizelements;
Bilden einer Beschichtungsschicht durch Beschichten der Beschichtungszusammensetzung auf die Oberfläche des oberflächenbehandelten Heizelements und
Härten der Beschichtungsschicht durch Wärmebehandeln des beschichteten Heizelements.

13. Verfahren nach Anspruch 12, wobei das Organopolysiloxan durch die folgende Formel 7 dargestellt wird: 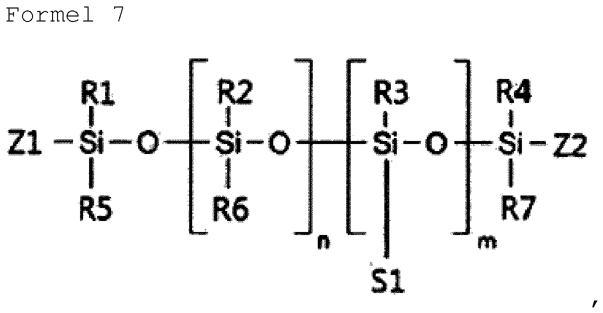 wobei R1 bis R7 aus der Gruppe bestehend aus einer Alkylgruppe mit linearer Kette, einer Alkylgruppe mit verzweigter Kette, einer cyclischen Alkylgruppe und einer Alkoxygruppe ausgewählt sind und
S1 durch die folgende Formel 8 dargestellt wird: 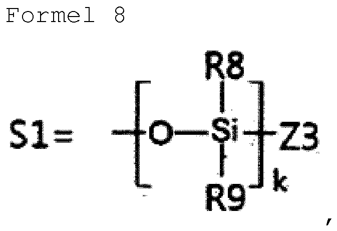 wobei R8 und R9 aus der Gruppe bestehend aus einer Alkylgruppe mit linearer Kette, einer Alkylgruppe mit verzweigter Kette, einer cyclischen Alkylgruppe und einer Alkoxygruppe ausgewählt sind oder eine Struktureinheit von Formel 8 aufweisen,
Z1 bis Z3 aus der Gruppe bestehend aus einer Hydroxylgruppe, einer Vinylgruppe und einer Alkoxygruppe ausgewählt sind,
n eine ganze Zahl von 1 bis 50.000 ist, m eine ganze Zahl von 1 bis 10.000 ist und k eine ganze Zahl von 0 bis 10.000 ist.

14. Verfahren nach Anspruch 12 oder 13, wobei das Oberflächenbehandeln des Heizelements das Bilden von Überständen und Rillen auf der Oberfläche des Heizelements durch Sandstrahlen oder chemisches Ätzen umfasst.

15. Verfahren nach Anspruch 12, 13 oder 14, wobei das Bilden der Beschichtungsschicht durch Beschichten der Beschichtungszusammensetzung auf die Oberfläche des Heizelements Sprühbeschichten, Tauchbeschichten, Aufschleudern oder Fluten umfasst.

## Revendications

1. Résistance chauffante de machine à laver destinée à venir en contact avec de l'eau ou de la vapeur, ladite résistance chauffante comprenant :
un fil chauffant ;
une couche d'oxyde de magnésium (MgO) disposée à l'extérieur du fil chauffant de façon à entourer ledit fil chauffant afin de transmettre de la chaleur du fil chauffant à l'extérieur ; et
une couche d'alliage inoxydable disposée à l'extérieur de la couche d'oxyde de magnésium de façon à entourer ladite couche d'oxyde de magnésium,
la surface de la couche d'alliage inoxydable étant revêtue d'une composition de revêtement qui contient une résine de silicone comprenant un organopolysiloxane et une silicone comprenant un polysilsesquioxane.

2. Résistance chauffante selon la revendication 1, dans laquelle la silicone comprenant un polysilsesquioxane est composée de fines particules.

3. Résistance chauffante selon la revendication 1 ou la revendication 2, dans laquelle l'organopolysiloxane est représenté par la formule 1 ci-dessous : 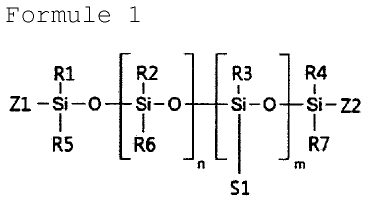 où R1 à R7 sont choisis dans le groupe constitué par un groupe alkyle à chaîne linéaire, un groupe alkyle à chaîne ramifiée, un groupe alkyle cyclique, un groupe aryle et un groupe alcoxy, et
S1 est représenté par la formule 2 ci-dessous : 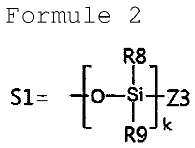 où R8 et R9 sont choisis dans le groupe constitué par un groupe alkyle à chaîne linéaire, un groupe alkyle à chaîne ramifiée, un groupe alkyle cyclique, un groupe aryle et un groupe alcoxy ou ils possèdent un motif répétitif de formule 2,
Z1 à Z3 sont choisis dans le groupe constitué par un groupe hydroxyle, un groupe vinyle et un groupe alcoxy,
n est un nombre entier valant de 1 à 50 000, m est un nombre entier valant de 1 à 10 000, et k est un nombre entier valant de 0 à 10 000.

4. Résistance chauffante selon la revendication 1 ou la revendication 2, dans laquelle la silicone comprenant un polysilsesquioxane est représentée par la formule 3 ci-dessous : 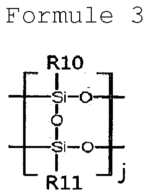 où R10 et R11 sont choisis dans le groupe constitué par un atome d'hydrogène, un groupe hydroxyle, un groupe vinyle, un groupe alcoxy, un groupe alkyle non substitué ou substitué par un groupe réactif, et un groupe allyle non substitué ou substitué par un groupe réactif, et
j est un nombre entier valant de 1 à 100 000.

5. Résistance chauffante selon l'une quelconque des revendications précédentes, dans laquelle la teneur en silicone comprenant un polysilsesquioxane se situe dans la plage de 0,1 à 50% en poids.

6. Résistance chauffante selon la revendication 2, dans laquelle les fines particules ont un diamètre d'environ 10 microns ou moins.

7. Résistance chauffante selon l'une quelconque des revendications précédentes, dans laquelle la composition de revêtement contient en outre un catalyseur à base de métal de transition ou un catalyseur acide afin de cuire la résine de silicone comprenant un organopolysiloxane et la silicone comprenant un polysilsesquioxane.

8. Résistance chauffante selon l'une quelconque des revendications précédentes, dans laquelle la couche d'alliage inoxydable possède sur sa surface des reliefs et des creux destinés à améliorer l'adhérence d'une couche de revêtement formée sur la surface de la couche d'alliage inoxydable.

9. Utilisation d'une composition comprenant une résine de silicone contenant un organopolysiloxane et un polysilsesquioxane pour former une composition de revêtement sur la surface d'une résistance chauffante destinée à venir en contact avec de l'eau ou de la vapeur.

10. Utilisation selon la revendication 9, dans laquelle l'organopolysiloxane est représenté par la formule 4 ci-dessous : 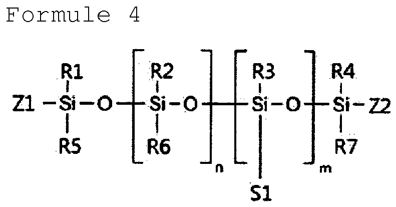 où R1 à R7 sont choisis dans le groupe constitué par un groupe alkyle à chaîne linéaire, un groupe alkyle à chaîne ramifiée, un groupe alkyle cyclique et un groupe alcoxy, et
S1 est représenté par la formule 5 ci-dessous : 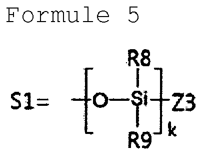 où R8 et R9 sont choisis dans le groupe constitué par un groupe alkyle à chaîne linéaire, un groupe alkyle à chaîne ramifiée, un groupe alkyle cyclique et un groupe alcoxy ou ils possèdent un motif répétitif de formule 5,
Z1 à Z3 sont choisis dans le groupe constitué par un groupe hydroxyle, un groupe vinyle et un groupe alcoxy,
n est un nombre entier valant de 1 à 50 000, m est un nombre entier valant de 1 à 10 000, et k est un nombre entier valant de 0 à 10 000.

11. Utilisation selon la revendication 10, dans laquelle le polysilsesquioxane est représenté par la formule 6 ci-dessous : 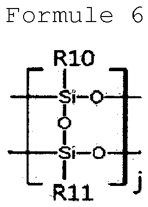 où R10 et R11 sont choisis dans le groupe constitué par un atome d'hydrogène, un groupe hydroxyle, un groupe vinyle, un groupe alcoxy, un groupe alkyle non substitué ou substitué par un groupe réactif, et un groupe allyle non substitué ou substitué par un groupe réactif, et
j est un nombre entier valant de 1 à 100 000.

12. Procédé de revêtement d'une résistance chauffante, comprenant les étapes consistant à :
préparer une composition de revêtement en mélangeant une résine de silicone comprenant un organopolysiloxane et un polysilsesquioxane ;
soumettre la résistance chauffante à un traitement de surface ;
former une couche de revêtement en déposant la composition de revêtement sur la surface de la résistance chauffante ayant subi le traitement de surface ; et
cuire la couche de revêtement en soumettant la résistance chauffante revêtue à un traitement thermique.

13. Procédé selon la revendication 12, dans lequel l'organopolysiloxane est représenté par la formule 7 ci-dessous : 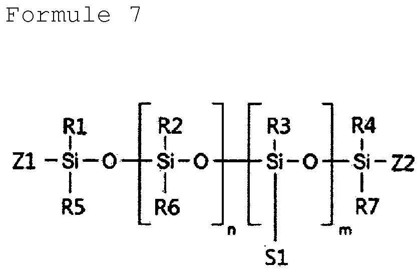 où R1 à R7 sont choisis dans le groupe constitué par un groupe alkyle à chaîne linéaire, un groupe alkyle à chaîne ramifiée, un groupe alkyle cyclique et un groupe alcoxy, et
S1 est représenté par la formule 8 ci-dessous : 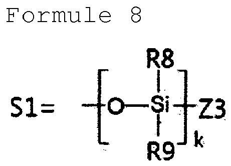 où R8 et R9 sont choisis dans le groupe constitué par un groupe alkyle à chaîne linéaire, un groupe alkyle à chaîne ramifiée, un groupe alkyle cyclique et un groupe alcoxy ou ils possèdent un motif répétitif de formule 8,
Z1 à Z3 sont choisis dans le groupe constitué par un groupe hydroxyle, un groupe vinyle et un groupe alcoxy,
n est un nombre entier valant de 1 à 50 000, m est un nombre entier valant de 1 à 10 000, et k est un nombre entier valant de 0 à 10 000.

14. Procédé selon la revendication 12 ou la revendication 13, dans lequel le traitement de surface de la résistance chauffante comprend la formation de reliefs et de creux sur la surface de la résistance chauffante par sablage ou par attaque chimique.

15. Procédé selon la revendication 12, la revendication 13 ou la revendication 14, dans lequel la formation de la couche de revêtement en déposant la composition de revêtement sur la surface de la résistance chauffante comprend le dépôt par pulvérisation, le dépôt par trempage, le dépôt par centrifugation ou le dépôt par arrosage.
